# EUROPÄISCHE PATENTSCHRIFT

(11) **EP 2 934 969 B1**
(45) Veröffentlichungstag und Bekanntmachung des Hinweises auf die Patenterteilung: **04.01.2017**
(21) Anmeldenummer: 13795787.4
(22) Anmeldetag: 28.11.2013
(51) Int. Cl.: B60T 8/44, B60T 8/42, B60T 13/74

(54) **ELEKTROHYDRAULISCHE FAHRZEUG-BREMSANLAGE UND VERFAHREN ZUM BETREIBEN DERSELBEN**
ELECTROHYDRAULIC MOTOR VEHICLE BRAKE SYSTEM AND METHOD FOR OPERATING THE SAME
SYSTÈME DE FREINAGE ÉLECTROHYDRAULIQUE POUR VÉHICULE ET PROCÉDÉ DE FONCTIONNEMENT

(30) Priorität: 21.12.2012 DE 102012025290
(43) Veröffentlichungstag der Anmeldung: 28.10.2015
(73) Patentinhaber: Lucas Automotive GmbH, 56070 Koblenz (DE)
(72) Erfinder: KNECHTGES, Josef, 56727 Mayen (DE)
(74) Vertreter: Röthinger, Rainer
(86) Internationale Anmeldenummer: PCT/EP2013/074916
(87) Internationale Veröffentlichungsnummer: WO 2014/095282

(56) Entgegenhaltungen:
- EP-A2- 2 399 792
- WO-A1-2010/006998
- WO-A1-2012/152352
- DE-A1- 10 338 046
- DE-A1-102006 055 799
- DE-A1-102009 043 484
- DE-A1-102009 054 985
- DE-A1-102010 042 694
- DE-A1-102010 055 044

## Beschreibung

### Technisches Gebiet

Die vorliegende Offenbarung betrifft allgemein das Gebiet der Fahrzeug-Bremsanlagen. Konkret wird eine elektrohydraulische Fahrzeug-Bremsanlage mit einem elektromechanischen Aktuator zur Betätigung der Bremsanlage beschrieben.

### Hintergrund

Elektromechanische Aktuatoren finden bereits seit geraumer Zeit in Fahrzeug-Bremsanlagen Verwendung, beispielsweise zur Realisierung einer elektrischen Parkbremsfunktion (EPB). Bei elektromechanischen Bremsanlagen (EMB) ersetzen sie die herkömmlichen Hydraulikzylinder an den Radbremsen.

Aufgrund technischer Fortschritte hat sich die Leistungsfähigkeit der elektromechanischen Aktuatoren fortlaufend erhöht. Es wurde daher in Erwägung gezogen, derartige Aktuatoren auch zur Implementierung moderner Fahrdynamikregelsysteme heranzuziehen. Zu solchen Regelsystemen zählen ein Antiblockiersystem (ABS), eine Antriebsschlupfregelung (ASR) oder ein elektronischen Stabilitätsprogramm (ESP), auch als Fahrzeugstabilitätsregelung (Vehicle Stability Control, VSC) bezeichnet.

Die WO 2006/111393 A lehrt eine elektrohydraulische Bremsanlage mit einem hochdynamischen elektromechanischen Aktuator, der die Druckmodulation im Fahrdynamikregelbetrieb übernimmt. Der in der WO 2006/111393 A beschriebene elektromechanische Aktuator ist dazu vorgesehen, direkt auf einen Hauptzylinder der Bremsanlage einzuwirken. Aufgrund der hohen Dynamik des elektromechanischen Aktuators lassen sich die hydraulischen Komponenten der aus der WO 2006/111393 A bekannten Bremsanlage auf ein einziges 2/2-Wege-Ventil pro Radbremse reduzieren. Zur Realisierung radindividueller Druckmodulationen werden die Ventile dann einzeln oder gruppenweise im Multiplex-Betrieb angesteuert.

Aus der Minimierung auf lediglich ein Ventil pro Radbremse resultieren jedoch auch Herausforderungen, wie ein ungewollter Druckausgleich bei gleichzeitig geöffneten Ventilen. Eine Lösung basierend auf einem hochdynamischen Regelverhalten hierfür wird in der WO 2010/091883 A angegeben.

Die WO 2010/091883 A offenbart eine elektrohydraulische Bremsanlage mit einem Hauptzylinder und einem darin aufgenommenen Tandemkolben. Der Tandemkolben ist mittels eines elektromechanischen Aktuators betätigbar. Der elektromechanische Aktuator umfasst einen konzentrisch zum Tandemkolben angeordneten Elektromotor sowie eine Getriebeanordnung, die eine Rotationsbewegung des Elektromotors in eine Translationsbewegung des Kolbens umsetzt. Die Getriebeanordnung besteht aus einem Kugelgewindetrieb mit einer drehfest mit einem Rotor des Elektromotors gekoppelten Kugelgewindemutter und einer auf den Tandemkolben einwirkenden Kugelgewindespindel.

Eine weitere elektrohydraulische Bremsanlage mit einem auf einen Hauptzylinder-Kolben wirkenden elektromechanischen Aktuator ist aus der WO 2012/152352 A bekannt. Diese Anlage kann in einem regenerativen Modus (Generatorbetrieb) arbeiten.

Die Druckschrift WO 2012/152352 A1 lehrt eine hydraulische Fahrzeug-Bremsanlage, welche einen Hauptzylinder mit wenigstens einem darin verschieblich aufgenommenen Kolben, einen mit einem Bremspedal gekoppelten oder koppelbaren mechanischen Aktuator zur Betätigung des Kolbens sowie einen elektromechanischen Aktuator umfasst. Der elektromechanische Aktuator ist ebenfalls zur Betätigung des Kolbens vorgesehen und ist zumindest zur Bremskraftverstärkung oder Bremskrafterzeugung bei einer Betätigung des Bremspedals ansteuerbar. Ferner ist eine Ventilanordnung vorgesehen, die pro Radbremse ein erstes Ventil zum selektiven Abkoppeln der Radbremse vom Hauptzylinder und ein zweites Ventil zum selektiven Bremsdruckabbau an der Radbremse besitzt. Die Ventilanordnung ist dabei zumindest im Rahmen eines ABS-Regelbetriebs ansteuerbar.

Die Druckschrift DE 10 2009 043484 A1 lehrt ein Bremssystem, welches eine Radbremse oder einen Bremskreis mit einem Fluidspeicher aufweist, bei dem die Speicherkammer alternativ über ein einstellbares Speicherventil mit einer Druckleitung verbunden ist. Die Druckleitung verbindet einen Arbeitsbereich eines Kolben-Zylinder-Systems und ein zur Radbremse angeordnetes Schaltventil.

### Kurzer Abriss

Es sind eine regenerative elektrohydraulische Kraftfahrzeug-Bremsanlage sowie ein Verfahren zum Betreiben einer solchen Bremsanlage anzugeben, die eine insbesondere aus Sicherheitsaspekten vorteilhafte Funktionalität aufweisen.

Gemäß einem Aspekt wird ein Verfahren angegeben für das Betreiben einer regenerativen elektrohydraulischen Kraftfahrzeug-Bremsanlage mit einem aus einem Reservoir mit Hydraulikfluid versorgbaren Hauptzylinder, einem elektromechanischen Aktuator zur Betätigung eines im Hauptzylinder aufgenommenen Kolbens und einem zwischen dem Hauptzylinder und dem Reservoir vorgesehenen Absperrventil. Das Verfahren umfasst die Schritte des Ansteuerns des elektromechanischen Aktuators bei geschlossenem Absperrventil zum Aufbauen eines Hydraulikdrucks an einer mit dem Hauptzylinder fluidisch verbundenen Radbremse, und das Aktivieren eines regenerativen Bremsbetriebs einschließlich Ansteuern des Absperrventils, um dieses zu öffnen, wobei der Hauptzylinder fluidisch mit der Radbremse verbunden bleibt und der elektromechanische Aktuator angesteuert wird, um den Hydraulikdruck an der Radbremse zumindest teilweise aufrecht zu erhalten.

Es ist darauf hinzuweisen, dass das Ansteuern des elektromechanischen Aktuators und das Aktivieren des regenerativen Bremsbetriebs im Wesentlichen gleichzeitig oder in einer (zum Beispiel zeitlich) festgelegten Abfolge erfolgen können. Der Aktivierungsschritt kann dabei dem Ansteuerschritt vorausgehen oder aber nachfolgen. Der Aktivierungsschritt kann insbesondere das Hinzuschalten eines elektrischen Generators umfassen. Gemäß einer Implementierung wird mit dem Aufbauen des Hydraulikdrucks begonnen, bevor sich die Bremswirkung des regenerativen Bremsbetriebs voll entfaltet. Da vom Zeitpunkt des Hinzuschaltens des Generators bis zur Entfaltung von dessen Bremswirkung eine gewisse Zeit vergehen kann, kann der regenerative Bremsbetrieb vor oder gleichzeitig mit dem Ansteuern des elektromechanischen Aktuators zur Erzielung einer unterstützenden hydraulischen Bremswirkung aktiviert werden.

Die hier vorgestellte Lehre kann in Bezug auf die Radbremsen einer einzigen Fahrzeugachse zum Einsatz gelangen. An der wenigstens einen anderen Fahrzeugachse kann eine Bremskraft mittels herkömmlichem Hydraulikdruckaufbau ohne Generatorunterstützung erfolgen.

Der Hydraulikdruck kann bei geöffnetem Absperrventil und mit der Radbremse fluidisch verbundenem Hauptzylinder eingestellt werden. Eine solche Einstellung kann beispielsweise durch das Verhältnis zwischen einem mittels des elektromechanischen Aktuators im Hauptzylinder geförderten ersten Fluidvolumen und einem über das Absperrventil in das Reservoir entweichenden zweiten Fluidvolumen definiert sein. Das Verhältnis kann sich im Rahmen eines Bremsvorgangs ändern.

Gemäß einer Implementierung erfolgt die Ansteuerung des elektromechanischen Aktuators bei geöffnetem Absperrventil und mit der Radbremse fluidisch verbundenem Hauptzylinder derart, dass ein Staueffekt an einer Drosselstelle in einer Fluidverbindung zwischen dem Hauptzylinder und dem Reservoir erzeugt wird. Die Drosselstelle kann durch Einfügen eines Drosselelements in diese Fluidverbindung realisiert werden. Bei dem Drosselelement kann es sich um ein Element mit fest vorgegebenem oder aber einstellbarem Drosseleffekt handeln.

Die Summe aus einem mittels des Hydraulikdrucks erzeugten ersten Bremskraftanteil und einem mittels des regenerativen Bremsbetriebs ("Generatorbremskraft") erzeugten zweiten Bremskraftanteil kann einer vom Fahrer angeforderten Bremskraft entsprechen. Die Bremskraft kann vom Fahrer beispielsweise durch Betätigung des Bremspedals angefordert werden. In diesem Zusammenhang können einer oder mehrere Sensoren verbaut sein, die eine Bremspedalbetätigung erfassen, und deren Ausgangssignal auf die angeforderte Bremskraft hinweist.

Eine Modulation der vom Fahrer angeforderten Bremskraft kann zumindest teilweise über eine Modulation des ersten Bremskraftanteils abgebildet werden. Zusätzlich oder alternativ hierzu kann eine Modulation der vom Fahrer angeforderten Bremskraft zumindest teilweise über eine Modulation des zweiten Bremskraftanteils abgebildet werden.

In einer Implementierung umfasst die Bremsanlage ferner einen mechanischen Aktuator zur Betätigung des Hauptzylinder-Kolbens. Der mechanische Aktuator kann einen mit einem Bremspedal gekoppeltes oder koppelbares Betätigungsglied umfassen. Bei einer derartigen Realisierung kann der elektromechanische Aktuator derart angesteuert werden, dass eine Kraftübertragung vom Betätigungsglied zum Kolben unterbunden wird. Zu diesem Zweck kann eine Entkoppeleinrichtung vorgesehen sein. Die Kraftübertragung vom Betätigungsglied zum Kolben lässt sich auf verschiedene Art und Weise unterbinden. So kann der elektromechanische Aktuator beispielsweise derart angesteuert werden, dass in einem Kraftübertragungsweg zwischen dem Betätigungsglied und dem Kolben ein Spalt aufrecht erhalten wird.

Ebenfalls bereitgestellt wird ein Computerprogrammprodukt mit Programmcodemitteln zum Durchführen des hier vorgestellten Verfahrens, wenn das Computerprogrammprodukt auf einem Prozessor abläuft. Das Computerprogrammprodukt kann von einem Kraftfahrzeug-Steuergerät oder Kraftfahrzeug-Steuergerätesystem umfasst sein.

Ein weiterer Aspekt ist auf eine regenerative elektrodydraulische Kraftfahrzeug-Bremsanlage gerichtet. Die Bremsanlage umfasst einen aus einem Reservoir mit Hydraulikfluid versorgbaren Hauptzylinder, einen elektromechanischen Aktuator zur Betätigung eines im Hauptzylinder aufgenommenen Kolbens, ein zwischen dem Hauptzylinder und dem Reservoir vorgesehenes erstes Absperrventil und ein Steuergerät oder Steuergerätesystem. Das Steuergerät oder Steuergerätesystem ist ausgebildet zum Ansteuern des elektromechanischem Aktuators bei geschlossenem ersten Absperrventil zum Aufbauen eines Hydraulikdrucks an einer mit dem Hauptzylinder fluidisch verbundenen Radbremse und zum Aktivieren eines regenerativen Bremsbetriebs einschließlich Ansteuern des ersten Absperrventils, um dieses zu öffnen, wobei der Hauptzylinder fluidisch mit der Radbremse verbunden bleibt und der elektromechanische Aktuator angesteuert wird, um den Hydraulikdruck an der Radbremse zumindest teilweise aufrecht zu erhalten.

Der im Hauptzylinder aufgenommene Kolben kann durch den elektromechanischen Aktuator unmittelbar oder mittelbar betätigt werden. Beispielsweise kann der elektromechanische Aktuator zur direkten Einwirkung auf den Kolben des Hauptzylinders angeordnet sein. Er kann hierfür mit dem Kolben mechanisch gekoppelt oder koppelbar sein. Der Kolben kann dann unmittelbar durch den Aktuator betätigt werden. Alternativ hierzu kann der elektromechanische Aktuator mit einer vom Hauptzylinder verschiedenen Zylinder-Kolben-Einrichtung der Bremsanlage zusammenwirken und die Zylinder-Kolben-Einrichtung auslassseitig mit dem Kolben des Hauptzylinders fluidisch gekoppelt sein. Ein durch Betätigung des elektromechanischen Aktuator in der Zylinder-Kolben-Einrichtung aufgebauter Hydraulikdruck kann dann auf den Kolben des Hauptzylinders einwirken und den Kolben im Hauptzylinder hydraulisch betätigen. In dieser Konfiguration kann der Hauptzylinder-Kolben über den in der Zylinder-Kolben-Anordnung und mit Hilfe des elektromechanischen Aktuator erzeugten Hydraulikdruck hydraulisch betätigt werden (mittelbare Betätigung).

Gemäß einer Realisierung umfasst die Bremsanlage ferner eine Drosselstelle in einer Fluidverbindung zwischen dem Hauptzylinder und dem Reservoir. Die Drosselstelle kann von einem beliebigen Drosselelement gebildet sein. Gemäß einer ersten Realisierung wird die Drosselstelle von dem ersten Absperrventil in geöffnetem Zustand gebildet. Mit anderen Worten kann das erste Absperrventil in geöffnetem Zustand eine gewisse Drosselwirkung besitzen. Gemäß einer anderen Realisierung ist zusätzlich oder alternativ zum ersten Absperrventil ein separates Drosselelement vorgesehen.

Ein erster Gesamtströmungswiderstand zwischen dem Hauptzylinder und der damit fluidisch verbundenen Radbremse kann geringer sein als ein zweiter Gesamtströmungswiderstand zwischen dem Hauptzylinder und dem Reservoir beim geöffneten Absperrventil. Diese Situation lässt sich beispielsweise dadurch herbeiführen, dass eine Drosselwirkung in der Fluidverbindung zwischen dem Hauptzylinder und dem Reservoir gezielt herbeigeführt wird.

Die Bremsanlage kann einen mechanischen Aktuator zur Betätigung des Hauptzylinder-Kolbens aufweisen. Der mechanische Aktuator wiederum kann ein mit einem Bremspedal gekoppeltes oder koppelbares Betätigungsglied umfassen. Dabei kann der elektromechanische Aktuator derart ansteuerbar sein, dass eine Kraftübertragung vom Betätigungsglied zum Kolben unterbindbar ist.

Die Bremsanlage kann ferner eine elektrische Maschine umfassen, die für den regenerativen Bremsbetrieb als Generator betreibbar ist. Mittels dieser elektrischen Maschine lässt sich Bremsenergie zurückgewinnen. Die zurückgewonnene Bremsenergie kann auf verschiedene Art und Weise verwendet werden.

Der Hauptzylinder kann mit einer Mehrzahl von Radbremsen fluidisch verbunden sein. In der Fluidverbindung zwischen dem Hauptzylinder und jeder Radbremse kann jeweils wenigstens ein zweites Absperrventil vorgesehen sein, wobei die zweiten Absperrventile zur Realisierung einer Fahrdynamikregelung im Multiplex-Betrieb ansteuerbar sind. So kann für die Fahrdynamikregelung pro Radbremse genau ein zweites Absperrventil (z.B. ein 2/2-Wege-Ventil) vorgesehen werden.

Gemäß einer ersten Variante ist bei der hier vorgestellten Bremsanlage der elektromechanische Aktuator zur Betätigung des Hauptzylinder-Kolbens im Rahmen einer Bremskraftverstärkung ausgebildet. Die zu verstärkende Bremskraft kann in diesem Fall auf den Kolben mittels des mechanischen Aktuators ausgeübt werden. Gemäß einer anderen Variante ist der elektromechanische Aktuator zur Betätigung des Kolbens zur Bremskrafterzeugung ausgebildet. Diese Variante kann beispielsweise im Rahmen eines Brake-By-Wire (BBW)-Betriebs zum Einsatz kommen, in dem das Bremspedal vom Hauptzylinder-Kolben (normalerweise) mechanisch entkoppelt ist. Bei einer für den BBW-Betrieb ausgelegten Bremsanlage kommt der mechanische Aktuator etwa bei Ausfall einer BBW-Komponente (also bei einer Notbremsung) zur Betätigung des Kolbens zum Einsatz.

Je nach Ausgestaltung der Fahrzeug-Bremsanlage kann das selektive Entkoppeln des Bremspedals vom Hauptzylinder-Kolben mittels der Entkoppeleinrichtung zu unterschiedlichen Zwecken geschehen. Bei einer gemäß dem BBW-Prinzip ausgelegten Bremsanlage kann abgesehen von einem "push-through"-Modus oder Notbremsbetrieb (in dem das Bremspedal über den mechanischen Aktuator mit dem Hauptzylinder-Kolben gekoppelt ist) eine ständige Entkopplung vorgesehen sein. Bei einer regenerativen Bremsanlage kann eine derartige Entkoppelung zumindest im Rahmen eines regenerativen Bremsbetriebs (Generatorbetrieb) erfolgen. Bei anderen Bremsanlagen können die Entkoppeleinrichtung sowie die Simulationseinrichtung auch völlig entfallen.

Zur Ansteuerung des elektromechanischen Aktuators sowie optionaler weiterer Komponenten der Fahrzeug-Bremsanlage kann die Bremsanlage geeignete Ansteuereinrichtungen aufweisen. Diese Ansteuereinrichtungen können elektrische, elektronische oder programmgesteuerte Baugruppen sowie Kombinationen hiervon umfassen. Beispielsweise können die Ansteuereinrichtungen in einem gemeinsamen Steuergerät oder in einem System aus getrennten Steuergeräten (Electronic Control Units, ECUs) bereitgestellt werden.

### Kurze Beschreibung der Zeichnungen

Weitere Vorteile, Aspekte und Einzelheiten der hier vorgestellten hydraulischen Fahrzeug-Bremsanlage ergeben sich aus der nachfolgenden Beschreibung exemplarischer Ausführungsbeispiele sowie aus den Figuren. Es zeigen:
- Fig. 1: ein erstes Ausführungsbeispiel einer elektrohydraulischen Fahrzeug-Bremsanlage;
- Fig. 2: ein zweites Ausführungsbeispiel einer elektrohydraulischen Fahrzeug-Bremsanlage;
- Fig. 3: ein drittes Ausführungsbeispiel einer elektrohydraulischen Fahrzeug-Bremsanlage;
- Fig. 4: ein viertes Ausführungsbeispiel einer elektrohydraulischen Fahrzeug-Bremsanlage;
- Fig. 5: ein Ablaufdiagramm, das ein Ausführungsbeispiel eines Verfahrens zum Betreiben der elektrohydraulischen Fahrzeug-Bremsanlage nach einem der vorhergehenden Fign. veranschaulicht; und
- Fign. 6A und 6B: Diagramme, welche den Hydraulikdruckverlauf sowie die Ansteuerung des elektromechanischen Aktuators veranschaulichen.

### Detaillierte Beschreibung

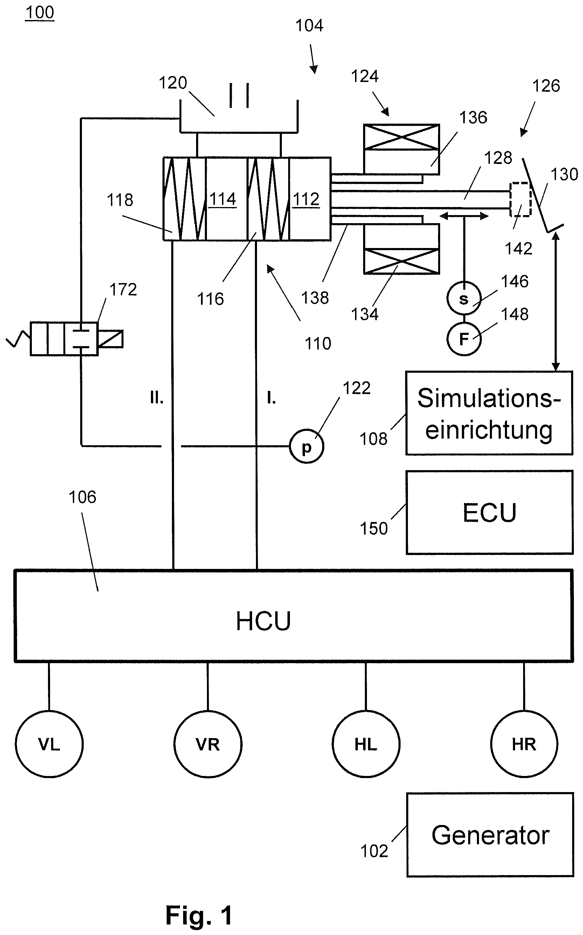

Fig. 1 zeigt ein erstes Ausführungsbeispiel einer hydraulischen Fahrzeug-Bremsanlage 100, die auf dem Brake-By-Wire (BBW)-Prinzip basiert. Die Bremsanlage 100 kann (z. B. bei Hybrid-Fahrzeugen) in einem regenerativen Modus betrieben werden. Zu diesen Zweck ist eine elektrische Maschine 102 vorgesehen, die eine Generatorfunktionalität bietet und selektiv mit Rädern und einem Energiespeicher, z.B. einer Batterie (nicht dargestellt), verbunden werden kann.

Wie in Fig. 1 veranschaulicht, umfasst die Bremsanlage 100 eine Hauptzylinder-Baugruppe 104, die an einer Fahrzeug-Spritzwand montiert werden kann. Eine hydraulische Steuereinheit (Hydraulic Control Unit, HCU) 106 der Bremsanlage 100 ist funktional zwischen der Hauptzylinder-Baugruppe 104 und vier Radbremsen VL, VR, HL und HR des Fahrzeugs angeordnet. Die HCU 106 ist als integrierte Baugruppe ausgebildet und umfasst eine Vielzahl von hydraulischen Einzelkomponenten sowie mehrere Fluideinlässe und Fluidauslässe. Ferner ist eine nur schematisch dargestellte Simulationseinrichtung 108 zum Bereitstellen eines Pedalrückwirkungsverhaltens im Betriebsbremsbetrieb vorgesehen. Die Simulationseinrichtung 108 kann auf einem mechanischen oder hydraulischen Prinzip basieren. Im zuletzt genannten Fall kann die Simulationseinrichtung 108 an die HCU 106 angeschlossen sein.

Die Hauptzylinder-Baugruppe 104 weist einen Hauptzylinder 110 mit einem darin verschieblich aufgenommenen Kolben auf. Der Kolben ist im Ausführungsbeispiel als Tandemkolben mit einem Primärkolben 112 und einem Sekundärkolben 114 ausgebildet und definiert im Hauptzylinder 110 zwei voneinander getrennte Hydraulikkammern 116, 118. Die beiden Hydraulikkammern 116, 118 des Hauptzylinders 110 sind zur Versorgung mit Hydraulikfluid über jeweils einen Anschluss mit einem drucklosen Hydraulikfluid-Reservoir 120 verbunden. Jede der beiden Hydraulikkammern 116, 118 ist ferner mit der HCU 106 gekoppelt und definiert jeweils einen Bremskreis I. und II. Im Ausführungsbeispiel ist für den Bremskreis I. ein Hydraulikdrucksensor 122 vorgesehen, der auch in die HCU 106 integriert werden könnte.

Die Hauptzylinder-Baugruppe 104 umfasst ferner einen elektromechanischen Aktuator (d.h. ein elektromechanisches Stellglied) 124 sowie einen mechanischen Aktuator (d.h. ein mechanisches Stellglied) 126. Sowohl der elektromechanische Aktuator 124 als auch der mechanische Aktuator 126 ermöglichen eine Betätigung des Hauptzylinder-Kolbens und wirken dazu auf eine eingangsseitige Stirnfläche dieses Kolbens, genauer gesagt des Primärkolbens 112, ein. Die Aktuatoren 124, 126 sind derart ausgebildet, dass sie unabhängig voneinander (und getrennt oder gemeinsam) den Hauptzylinder-Kolben zu betätigen vermögen.

Der mechanische Aktuator 126 besitzt ein Kraftübertragungselement 128, das stangenförmig ausgebildet ist und unmittelbar auf die eingangsseitige Stirnfläche des Primär-Kolbens 112 einzuwirken vermag. Wie in Fig. 1 gezeigt, ist das Kraftübertra-gungselement 128 mit einem Bremspedal 130 gekoppelt. Es versteht sich, dass der mechanische Aktuator 126 weitere Komponenten umfassen kann, die funktional zwischen dem Bremspedal 130 und dem Hauptzylinder 110 angeordnet sind. Derartige weitere Komponenten können sowohl mechanischer als auch hydraulischer Natur sein. Im zuletzt genannten Fall ist der Aktuator 126 als hydraulisch-mechanischer Aktuator 126 ausgebildet.

Der elektromechanische Aktuator 124 weist einen Elektromotor 134 sowie ein dem Elektromotor 134 abtriebsseitig nachfolgendes Getriebe 136, 138 auf. Im Ausführungsbeispiel ist das Getriebe eine Anordnung aus einer drehbar gelagerten Mutter 136 und einer mit der Mutter 136 (z.B. über Wälzkörper wie Kugeln) in Eingriff stehenden und in axialer Richtung beweglichen Spindel 138. In anderen Ausführungsbeispielen können Zahnstangengetriebe oder andere Getriebetypen zum Einsatz gelangen.

Der Elektromotor 134 besitzt im vorliegenden Ausführungsbeispiel eine zylindrische Bauform und erstreckt sich konzentrisch zum Kraftübertragungselement 128 des mechanischen Aktuators 126. Genauer gesagt ist der Elektromotor 134 radial außen bezüglich des Kraftübertragungselements 128 angeordnet. Ein Rotor (nicht dargestellt) des Elektromotors 134 ist drehfest mit der Getriebemutter 136 gekoppelt, um diese in Drehung zu versetzen. Eine Drehbewegung der Mutter 136 überträgt sich derart auf die Spindel 138, dass eine axiale Verschiebung der Spindel 138 resultiert. Die in Fig. 1 linke Stirnseite der Spindel 138 kann dabei (ggf. über ein Zwischenglied) in Anlage an die in Fig. 1 rechte Stirnseite des Primärkolbens 112 gelangen und in Folge dessen den Primärkolben 112 (zusammen mit dem Sekundärkolben 114) in Fig. 1 nach links verschieben. Ferner lässt sich die Kolbenanordnung 112, 114 auch von dem sich durch die (als Hohlkörper ausgebildete) Spindel 138 erstreckenden Kraftübertragungselement 128 des mechanischen Aktuators 126 in Fig. 1 nach links verschieben. Ein Verschieben der Kolbenanordnung 112, 114 in Fig. 1 nach rechts wird mittels des in den Hydraulikkammern 116, 118 herrschenden Hydraulikdrucks (bei Loslassen des Bremspedals 130 und ggf. bei motorischem Verschieben der Spindel 138 nach rechts) bewerkstelligt.

In der in Fig. 1 gezeigten Variante der Hauptzylinder-Baugruppe 104 ist der elektromechanische Aktuator 124 derart angeordnet, dass er unmittelbar auf den Kolben (genauer gesagt auf den Primärkolben 112) des Hauptzylinders 110 zum Aufbau eines Hydraulikdrucks an den Radbremsen einwirken kann. Mit anderen Worten wird der Kolben 112 des Hauptzylinders 110 unmittelbar durch den elektromechanischen Aktuator 124 mechanisch betätigt.

In einer alternativen Ausgestaltung der Hauptzylinder-Baugruppe 104 kann der Kolben des Hauptzylinders 110 mit Hilfe des elektromechanischen Aktuators 124 hydraulisch betätigt werden (in Fig. 1 nicht dargestellt). In diesem Fall kann der Hauptzylinder 110 mit einer weiteren, mit dem elektromechanischen Aktuator 124 zusammenwirkenden Zylinder-Kolben-Einrichtung fluidisch gekoppelt sein. Konkret kann die mit dem elektromechanischen Aktuator 124 gekoppelte Zylinder-Kolben-Einrichtung auslassseitig mit dem Primärkolben 112 des Hauptzylinders 110 beispielsweise derart fluidisch gekoppelt sein, dass ein in der Zylinder-Kolben-Einrichtung erzeugter Hydraulikdruck unmittelbar auf den Primärkolben 112 wirkt und somit zu einer Betätigung des Primärkolbens 112 im Hauptzylinder 110 führt. Der Primärkolben 112 wird dann in einer Regulierung aufgrund des einwirkenden Hydraulikdruckes im Hauptzylinder 110 so weit verschoben (Verschiebung nach links in Fig. 1), bis der in den Hauptzylinder-Kammern 116, 118 erzeugte Hydraulikdruck dem in der zusätzlichen Zylinder-Kolben-Einrichtung erzeugten Hydraulikdruck entspricht.

Wie in Fig. 1 gezeigt, ist eine Entkoppeleinrichtung 142 funktional zwischen dem Bremspedal 130 und dem Kraftübertragungselement 128 vorgesehen. Die Entkoppeleinrichtung 142 ermöglicht ein selektives Entkoppeln des Bremspedals 130 von der Kolbenanordnung 112, 114 im Hauptzylinder 110, beispielsweise durch Unterbrechung des Kraftübertragungswegs. Nachfolgend werden die Funktionsweisen der Entkoppeleinrichtung 142 und der Simulationseinrichtung 108 näher erläutert. In diesem Zusammenhang ist darauf hinzuweisen, dass die in Fig. 1 dargestellt Bremsanlage 100 auf dem Prinzip des Brake-By-Wire (BBW) basiert. Dies bedeutet, dass im Rahmen einer normalen Betriebsbremsung sowohl die Entkoppeleinrichtung 142 als auch die Simulationseinrichtung 108 aktiviert sind. Demgemäß ist das Bremspedal 130 vom Kraftübertragungselement 128 (und damit von der Kolbenanordnung 112, 114 im Hauptzylinder 110) entkoppelt, und eine Betätigung der Kolbenanordnung 112, 114 kann ausschließlich über den elektromechanischen Aktuator 124 erfolgen. Das gewohnte Pedalrückwirkverhalten wird in diesem Fall von der mit dem Bremspedal 130 gekoppelten Simulationseinrichtung 108 bereitgestellt.

Im Rahmen der Betriebsbremsung übernimmt damit der elektromechanische Aktuator 124 die Bremskrafterzeugungsfunktion. Eine durch Niedertreten des Bremspedals 130 angeforderte Bremskraft wird dabei dadurch erzeugt, dass mittels des Elektromotors 134 die Spindel 138 in Fig. 1 nach links verschoben und dadurch auch der Primärkolben 112 und der Sekundär-Kolben 114 des Hauptzylinders 110 nach links bewegt werden. Auf diese Weise wird Hydraulikfluid aus den Hydraulikkammern 116, 118 über die HCU 106 zu den Radbremsen VL, VR, HL und HR gefördert.

Die Höhe der daraus resultierenden Bremskraft der Radbremsen VL, VR, HL und HR wird in Abhängigkeit einer sensorisch erfassten Bremspedalbetätigung eingestellt. Zu diesem Zweck sind ein Wegsensor 146 und ein Kraftsensor 148 vorgesehen, deren Ausgangssignale von einem den Elektromotor 134 ansteuernden Steuergerät (Electronic Control Unit, ECU) 150 ausgewertet werden. Der Wegsensor 146 erfasst einen mit einer Betätigung des Bremspedals 130 in Zusammenhang stehenden Betätigungsweg, während der Kraftsensor 148 eine damit in Zusammenhang stehende Betätigungskraft erfasst. In Abhängigkeit von den Ausgangssignalen der Sensoren 146, 148 (sowie ggf. des Drucksensors 122) wird vom Steuergerät 150 ein Ansteuersignal für den Elektromotor 134 erzeugt.

Nachdem die Vorgänge bei einer Betriebsbremsung näher erläutert wurden, wird jetzt kurz der Notbremsbetrieb ("push-through"-Modus) geschildert. Der Notbremsbetrieb ist beispielsweise die Folge des Ausfalls der Fahrzeugbatterie oder einer Komponente des elektromechanischen Aktuators 124. Eine Deaktivierung der Entkoppeleinrichtung 142 (und der Simulationseinrichtung 108) im Notbremsbetrieb ermöglicht eine direkte Koppelung des Bremspedals 130 mit dem Hauptzylinder 110, nämlich über das Kraftübertragungselement 128. Die Notbremsung wird eingeleitet durch Niedertreten des Bremspedals 130. Die Bremspedalbetätigung überträgt sich dann über das Kraftübertragungselement 128 auf den Hauptzylinder 110. In Folge dessen verschiebt sich die Kolbenanordnung 112, 114 in Fig. 1 nach links. Dadurch wird zur Bremskrafterzeugung Hydraulikfluid aus den Hydraulikkammern 116, 118 des Hauptzylinders 110 über die HCU 106 zu den Radbremsen VL, VR, HL und HR gefördert.

Gemäß einer ersten Ausführungsform besitzt die HCU 106 in Bezug auf den Fahrdynamikregelbetrieb (Bremsregelfunktionen wie ABS, ASR, ESP, etc.) einen im Prinzip herkömmlichen Aufbau mit insgesamt 12 Ventilen (zusätzlich zu Ventilen, die beispielsweise im Zusammenhang mit der Aktivierung bzw. Deaktivierung der Entkoppeleinrichtung 142 und der Simulationseinrichtung 106 verwendet werden). Da der elektromechanische Aktuator 124 dann (ggf. ausschließlich) im Rahmen einer Bremskrafterzeugung angesteuert wird, werden die zusätzlichen Regelfunktionen in bekannter Weise mittels der HCU 106 (und ggf. einem separaten Hydraulikdruckerzeuger wie einer Hydraulikpumpe) bewerkstelligt. Es kann aber auch auf einen Hydraulikdruckerzeuger in der HCU 106 verzichtet werden. Der elektromechanische Aktuator 124 übernimmt dann zusätzlich noch die Druckmodulation im Rahmen des Regelbetriebs. Ein entsprechender Regelmechanismus wird hierzu in das für den elektromechanischen Aktuator 124 vorgesehene Steuergerät 150 implementiert werden.

Wie in Fig. 1 dargestellt, umfasst die Bremsanlage 100 ferner ein Ventil 172, das als Absperrventil ausgebildet ist und in die HCU 106 integriert werden kann. Das Ventil 172 ist funktional zwischen der Hydraulikkammer 116 und den drucklosen Hydraulikfluidreservoir 120 vorgesehen. In manchen Ausführungsformen kann ein weiteres derartiges Ventil (nicht dargestellt) funktional zwischen der anderen Hydraulikkammer 118 und dem Reservoir 120 vorhanden sein.

Das Ventil 172 wird für den regenerativen Bremsbetrieb verwendet. Wird bei einer Betriebsbremsung der regenerative Bremsbetrieb aktiviert, so wird der Generator 102 in bekannter Weise hinzugeschaltet. Um die Generatorwirkung energetisch voll ausschöpfen zu können, wird üblicherweise an den Radbremsen VL, VR, HL und HR der Räder, die über den Generator 102 abgebremst werden, kein Hydraulikdruck aufgebaut. Die Hydraulikkammern 116, 118 werden hierzu über die HCU 106 von den entsprechenden Radbremsen VL, VR, HL und HR abgekoppelt.

Bei einer Betätigung des Bremspedals 130 müssen dann auch der Primärkolben 112 und der Sekundärkolben 114 in Fig. 1 nach links verschoben werden (typischerweise mittels des elektromechanischen Aktuators 124), damit genügend axialer Freiraum für eine Betätigung des Bremspedals 130 zur Verfügung steht. Das aus den Hydraulikkammer 116, 118 verdrängte Hydraulikfluid kann aber nicht zu den Radbremsen VL, VR, HL und HR gelangen, um die Generatorbremskraft maximal ausnutzen zu können (d.h. um keinen hydraulischen Druck aufzubauen). Zu diesem Zweck werden das Ventil 172 zwischen der Hydraulikkammer 116 und dem Reservoir 120 (und/oder das optional vorgesehene Ventil zwischen der Hydraulikkammer 118 und dem Reservoir 120) geöffnet. Das aus den Hydraulikkammern 116, 118 entweichende Hydraulikfluid kann so zum drucklosen Reservoir 120 gelangen.

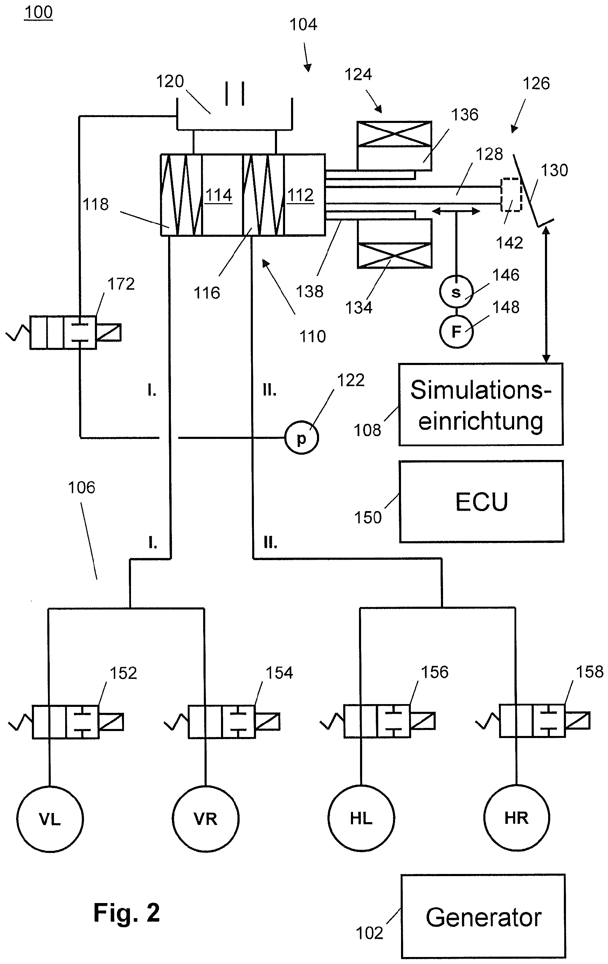

Bei einer weiteren Ausführungsform gemäß Fig. 2 können in der HCU 106 die speziellen Ventile für den Fahrdynamikregelbetrieb (z.B. den ASR- und ESP-Betrieb) bis auf vier Ventile 152, 154, 156, 158 entfallen. Bei dieser anderen Ausführungsform der HCU 106 kann also auf die aus der WO 2010/091883 A oder WO 2011/141158 A (vgl. Fig. 15) bekannte Ventilanordnung mit lediglich vier Ventilen 152, 154, 156, 158 (und der entsprechenden Ansteuerung) zurückgegriffen werden. Auch die Hydraulikdruckmodulation im Regelbetrieb erfolgt dann mittels des elektromechanischen Aktuators 124. Mit anderen Worten wird der elektromechanische Aktuator 124 in diesem Fall nicht nur zur Bremskrafterzeugung im Rahmen einer Betriebsbremsung, sondern auch beispielsweise zum Zweck der Fahrdynamikregelung (also z.B. im ABS- und/oder ASR- und/oder ESP-Regelbetrieb) angesteuert. Zusammen mit der Ansteuerung des elektromechanischen Aktuators 124 erfolgt eine radindividuelle oder radgruppenindividuelle Ansteuerung der Ventile 152, 154, 156, 158 im Multiplexbetrieb. In der in Fig. 2 gezeigten Implementierung sind zwischen den Ventilen 152, 154, 156, 158 und dem Hauptzylinder keine weiteren Ventile für Fahrdynamikregelzwecke vorhanden.

Der Multiplex-Betrieb kann ein Zeitmultiplex-Betrieb sein. Dabei können allgemein einzelne Zeitschlitze vorgegeben werden. Einem einzelnen Zeitschlitz wiederum können eine oder mehrere der Ventile 152, 154, 156, 158 zugeordnet sein, die während des entsprechenden Zeitschlitzes ein- oder mehrfach betätigt werden (beispielsweise durch Änderung des Schaltzustands von geöffnet nach geschlossen und/oder umgekehrt). Gemäß einer Realisierung ist jedem der Ventile 152, 154, 158 genau ein Zeitschlitz zugeordnet. Einer oder mehreren weiteren Ventilanordnungen (in Fig. 2 nicht dargestellt) können ein oder mehrere weitere Zeitschlitze zugeordnet sein.

Im Multiplexbetrieb können beispielsweise zunächst mehrere oder alle der Ventile 152, 154, 156, 158 geöffnet sein und gleichzeitig mittels des elektromechanischen Aktuators 124 ein Hydraulikdruck an mehreren oder allen zugeordneten Radbremsen VL, VR, HL und HR aufgebaut werden. Bei Erreichen eines radindividuellen Zieldrucks schließt dann das entsprechende Ventil 152, 154, 156, 158 zeitschlitz-synchron, während eines oder mehrere weitere Ventile 152, 154, 156, 158 so lange weiterhin geöffnet bleiben, bis auch dort der jeweilige Zieldruck erreicht ist. Die vier Ventile 152, 154, 156, 158 werden daher im Multiplexbetrieb individuell pro Rad oder Radgruppe in Abhängigkeit des jeweiligen Zieldrucks geöffnet und geschlossen.

Gemäß einer Ausführung sind die Ventile 152, 154, 156, 158 als 2/2-Wege-Ventile realisiert und beispielsweise als nichtregelbare Absperrventile ausgebildet. In diesem Fall kann daher kein Öffnungsquerschnitt eingestellt werden, wie es beispielsweise bei Proportionalventilen der Fall wäre. In einer anderen Ausführung sind die Ventile 152, 154, 156, 158 als Proportionalventile mit einstellbarem Öffnungsquerschnitt realisiert.

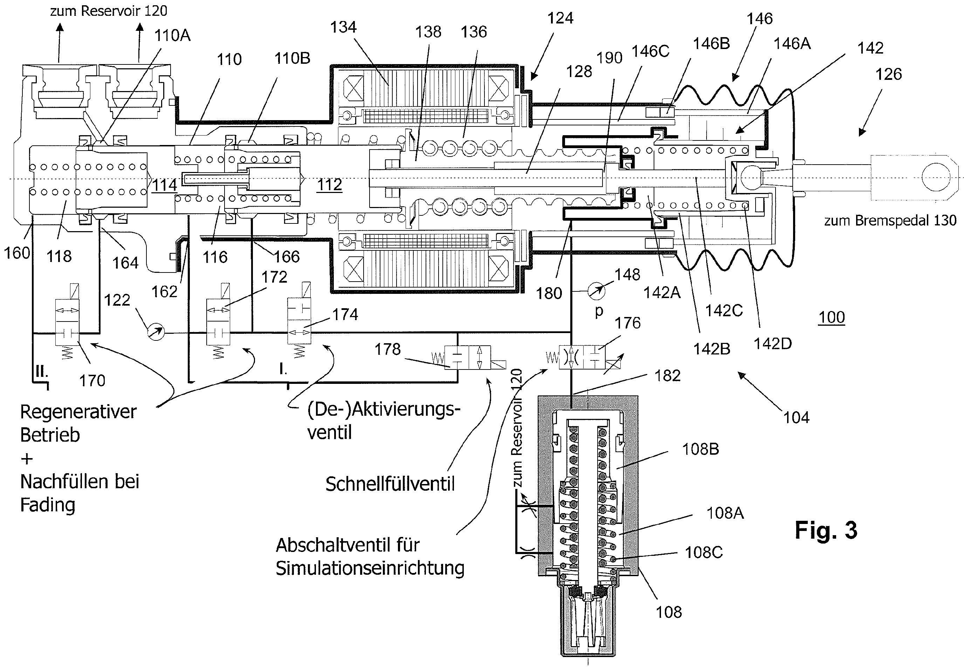

Fig. 3 zeigt ein detaillierteres Ausführungsbeispiel einer Fahrzeug-Bremsanlage 100, welche auf dem im Zusammenhang mit den schematischen Ausführungsbeispielen der Fign. 1 und 2 erläuterten Funktionsprinzip basiert. Gleiche oder ähnliche Elemente wurden dabei mit den gleichen Bezugszeichen wie in den Fign. 1 und 2 versehen, und auf deren Erläuterung wird nachfolgend verzichtet. Der Klarheit halber wurden die ECU, die Radbremsen, die den Radbremsen zugeordneten Ventileinheiten der HCU und der Generator für den regenerativen Bremsbetrieb nicht dargestellt.

Auch die in Fig. 3 veranschaulichte Fahrzeug-Bremsanlage 100 umfasst zwei Bremskreise I. und II., wobei zwei Hydraulikkammern 116, 118 eines Hauptzylinders 110 jeweils wiederum genau einem Bremskreis I., II. zugeordnet sind. Der Hauptzylinder 110 besitzt pro Bremskreis I., II. zwei Anschlüsse. Die beiden Hydraulikkammern 116, 118 münden dabei jeweils in einen ersten Anschluss 160, 162, über den Hydraulikfluid aus der jeweiligen Kammer 116, 118 in den zugeordneten Bremskreis I., II. gefördert werden kann. Ferner kann jeder der Bremskreise I. und II. über jeweils einen zweiten Anschluss 164, 166, der in eine entsprechende Ringkammer 110A, 110B im Hauptzylinder 110 mündet, mit dem in Fig. 3 nicht dargestellten drucklosen Hydraulikfluid-Reservoir (Bezugszeichen 120 in Fig. 1) verbunden werden.

Zwischen dem jeweils ersten Anschluss 160, 162 und dem jeweils zweiten Anschluss 164, 166 des Hauptzylinders 110 ist jeweils ein Ventil 170, 172 vorgesehen, das im Ausführungsbeispiel als ein 2/2-Wege-Ventil realisiert ist. Mittels der Ventile 170, 172 können die ersten und zweiten Anschlüsse 160, 162, 164, 166 selektiv miteinander verbunden werden. Dies entspricht einem "hydraulischer Kurzschluss" zwischen dem Hauptzylinder 110 einerseits und, auf der anderen Seite, dem drucklosen Hydraulikfluidreservoir (welches dann über die Ringkammern 110A, 110B mit den Hydraulikkammern 116, 118 verbunden wird). In diesem Zustand können die Kolben 112, 114 im Hauptzylinder 110 im Wesentlichen widerstandsfrei durch den elektromechanischen Aktuator 124 oder den mechanischen Aktuator 126 verschoben werden ("Leerwegfreischaltung"). Die beiden Ventile 170, 172 ermöglichen so beispielsweise einen regenerativen Bremsbetrieb (Generatorbetrieb). Hier wird das bei einer Förderbewegung im Hauptzylinder 110 aus den Hydraulikkammern 116, 118 verdrängte Hydraulikfluid dann nicht zu den Radbremsen geleitet, sondern zum drucklosen Hydraulikfluidreservoir, ohne dass es zu einem (im regenerativen Bremsbetrieb in der Regel unerwünschten) Hydraulikdruckaufbau an den Radbremsen käme. Eine Bremswirkung wird im regenerativen Bremsbetrieb dann durch den Generator (vgl. Bezugszeichen 102 in den Fign. 1 und 2) erzielt.

Es ist darauf hinzuweisen, dass der regenerative Bremsbetrieb achsweise implementiert sein kann. Daher kann im Fall einer achsbezogenen Bremskreisaufteilung im regenerativen Bremsbetrieb eines der beiden Ventile 170, 172 geschlossen und das andere geöffnet sein.

Die beiden Ventile 170, 172 ermöglichen ferner den Abbau von Hydraulikdruck an den Radbremsen. Ein solcher Druckabbau kann bei Ausfall (z.B. einer Blockierung) des elektromechanischen Aktuators 124 erwünscht sein oder im Fahrdynamikregelbetrieb, um einen Rückhub des elektromechanischen Aktuators 124 zu vermeiden (z.B. um eine Rückwirkung auf das Bremspedal zu vermeiden). Auch zum Druckabbau werden die beiden Ventile 170, 172 in ihre geöffnete Stellung übergeführt, wodurch Hydraulikfluid aus den Radbremsen über die Ringkammern 110A, 110B im Hauptzylinder 110 in das Hydraulikfluid-Reservoir zurückströmen kann.

Schließlich ermöglichen die Ventile 170, 172 auch noch ein Nachfüllen der Hydraulikkammern 116, 118. Ein solches Nachfüllen kann während eines laufenden Bremsvorgangs erforderlich werden (z.B. aufgrund von so genanntem Bremsen-"Fading"). Zum Nachfüllen werden die Radbremsen über zugeordnete Ventile der HCU (in Fig. 3 nicht dargestellt) fluidisch von den Hydraulikkammern 116, 118 getrennt. Der an den Radbremsen herrschende Hydraulikdruck wird also "eingesperrt". Daraufhin werden die Ventile 170, 172 geöffnet. Bei einem anschließenden Rückhub der im Hauptzylinder 110 vorgesehen Kolben 112, 114 (in Fig. 3 nach rechts) wird dann Hydraulikfluid aus dem drucklosen Reservoir in die Kammern 116, 118 gesaugt. Schließlich können die Ventile 170, 172 wieder geschlossen und die Hydraulikverbindungen zu den Radbremsen wieder geöffnet werden. Bei einem nachfolgenden Förderhub der Kolben 112, 114 (in Fig. 3 nach links) kann dann der vormals "eingesperrte" Hydraulikdruck weiter erhöht werden.

Wie in Fig. 3 gezeigt, basieren im vorliegenden Ausführungsbeispiel sowohl eine Simulationseinrichtung 108 als auch eine Entkoppeleinrichtung 142 auf einem hydraulischen Prinzip. Beide Einrichtungen 108, 142 umfassen jeweils einen Zylinder 108A, 142A zur Aufnahme von Hydraulikfluid sowie einen im jeweiligen Zylinder 108A, 142A aufgenommenen Kolben 108B, 142B. Der Kolben 142B der Entkoppeleinrichtung ist 142 ist mechanisch mit einem in Fig. 3 nicht dargestellten Bremspedal (vgl. Bezugszeichen 130 in den Fign. 1 und 2) gekoppelt. Ferner besitzt der Kolben 142B einen sich durch den Zylinder 142A in axialer Richtung hindurch erstreckenden Fortsatz 142C. Der Kolbenfortsatz 142C verläuft koaxial zu einem Kraftübertragungselement 128 für den Primärkolben 112 und ist diesem in Betätigungsrichtung des Bremspedals vorgelagert.

Jeder der beiden Kolben 108B, 142B wird von einem elastischen Element 108C, 142D (hier jeweils einer Schraubenfeder) in seine Ausgangsstellung vorgespannt. Die Kennlinie des elastischen Elements 108C der Simulationseinrichtung 108 definiert hierbei das gewünschte Pedalrückwirkverhalten.

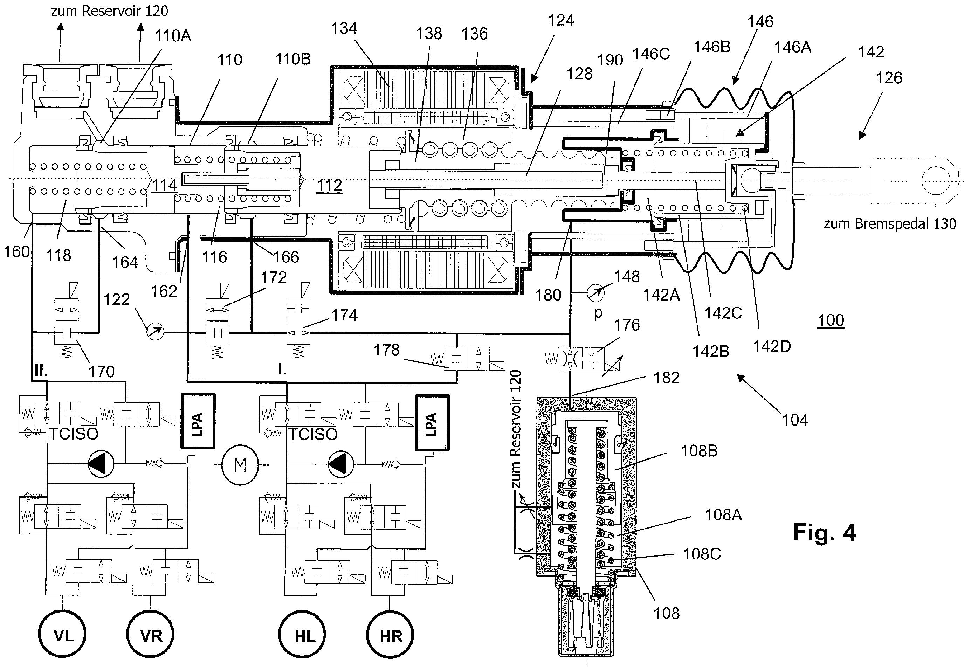

Wie ferner in Fig. 3 gezeigt, umfasst die Fahrzeug-Bremsanlage 100 im vorliegenden Ausführungsbeispiel drei weitere Ventile 174, 176, 178, die hier als 2/2-Wege-Ventile realisiert sind. Es versteht sich, dass einzelne oder alle dieser drei Ventile 174, 176, 178 bei anderen Ausführungsformen, bei denen die entsprechenden Funktionalitäten nicht erforderlich sind, entfallen können. Ferner versteht sich, dass alle diese Ventile Teil eines einzigen HCU-Blocks (vgl. Bezugszeichen 106 in den Fign. 1 und 2) sein können. Dieser HCU-Block kann weitere Ventile umfassen (vgl. Fig. 4 weiter unten).

Das erste Ventil 174 ist einerseits zwischen der Entkoppeleinrichtung 142 (über einen im Zylinder 142A vorgesehenen Anschluss 180) sowie der Simulationseinrichtung 108 (über einen im Zylinder 108A vorgesehenen Anschluss 182) und andererseits dem drucklosen Hydraulikfluidreservoir (über den Anschluss 166 des Hauptzylinders 110) vorgesehen. Dem Anschluss 182 des Zylinders 108A ist das zweite Ventil 176 vorgeschaltet, das in seiner Durchlass-Stellung eine Drosselcharakteristik aufweist. Das dritte Ventil 178 schließlich ist zwischen der Hydraulikkammer 116 (über den Anschluss 166) und dem Bremskreis I. einerseits und dem Zylinder 142A der Entkoppeleinrichtung 142 (über den Anschluss 180) andererseits vorgesehen.

Das erste Ventil 174 ermöglicht eine selektive Aktivierung und Deaktivierung der Entkoppeleinrichtung 142 (und indirekt auch der Simulationseinrichtung 108). Befindet sich das Ventil 174 in seiner geöffneten Stellung, ist der Zylinder 142A der Entkoppeleinrichtung 142 hydraulisch mit dem drucklosen Hydraulikreservoir verbunden. In dieser Stellung ist die Entkoppeleinrichtung 142 entsprechend dem Notbremsbetrieb deaktiviert. Ferner ist auch die Simulationseinrichtung 108 deaktiviert.

Das Öffnen des Ventils 174 bewirkt, dass bei Verschieben des Kolbens 142B (infolge einer Betätigung des Bremspedals) das im Zylinder 142A aufgenommene Hydraulikfluid weitgehend widerstandsfrei in das drucklose Hydraulikfluidreservoir gefördert werden kann. Dieser Vorgang ist im Wesentlichen unabhängig von der Stellung des Ventils 176, da dieses auch in seiner geöffneten Stellung eine signifikante Drosselwirkung besitzt. Somit ist bei geöffneter Stellung des Ventils 174 auf indirekte Weise auch die Simulationseinrichtung 108 deaktiviert.

Bei einer Bremspedalbetätigung im geöffneten Zustand des Ventils 174 überwindet der Kolbenfortsatz 142C einen Spalt 190 hin zum Kraftübertragungselement 128 und gelangt infolgedessen in Anlage an das Kraftübertragungselement 128. Das Kraftübertragungselement 128 wird nach Überwindung des Spalts 190 von der Verschiebung des Kolbenfortsatzes 142C erfasst und betätigt daraufhin den Primärkolben 112 (sowie - indirekt - den Sekundärkolben 114) im Hauptbremszylinder 110. Dies entspricht der bereits im Zusammenhang mit der Fig. 1 erläuterten direkten Kopplung von Bremspedal und Hauptzylinderkolben zum Hydraulikdruckaufbau in den Bremskreisen I., II. im Notbremsbetrieb.

Bei geschlossenem Ventil 174 (und geschlossenem Ventil 178) ist die Entkoppeleinrichtung 142 hingegen aktiviert. Dies entspricht dem Betriebsbremsbetrieb. Dabei wird bei einer Betätigung des Bremspedals Hydraulikfluid aus dem Zylinder 142A in den Zylinder 108A der Simulationseinrichtung 108 gefördert. Auf diese Weise wird der Simulator-Kolben 108B gegen die vom elastischen Element 108C bereit gestellte Gegenkraft verschoben, so dass sich das gewohnte Pedalrückwirkverhalten einstellt. Gleichzeitig wird der Spalt 190 zwischen dem Kolbenfortsatz 142C und dem Kraftübertragungselement 128 weiter aufrechterhalten. Dadurch ist das Bremspedal vom Hauptzylinder mechanisch entkoppelt.

Im vorliegenden Ausführungsbeispiel erfolgt die Aufrechterhaltung des Spalts 190 dadurch, dass mittels des elektromechanischen Aktuators 124 der Primärkolben 112 wenigstens so schnell in Fig. 3 nach links bewegt wird, wie sich der Kolben 142B aufgrund der Bremspedalbetätigung nach links bewegt. Da das Kraftübertragungselement 128 mechanisch oder anderweitig (z.B. magnetisch) mit dem Primärkolben 112 gekoppelt ist, bewegt sich das Kraftübertragungselement 128 zusammen mit dem Primärkolben 112 bei dessen Betätigung mittels der Getriebespindel 138. Diese Mitnahme des Kraftübertragungselements 128 gestattet die Aufrechterhaltung des Spalts 190.

Die Aufrechterhaltung des Spalts 190 im Betriebsbremsbetrieb erfordert eine präzise Erfassung des vom Kolben 142B zurückgelegten Wegs (und damit des Pedalwegs). Zu diesem Zweck ist ein auf einem magnetischen Prinzip basierender Wegsensor 146 vorgesehen. Der Wegsensor 146 umfasst einen starr mit dem Kolben 142B gekoppelten Stößel 146A, an dessen Ende ein Magnetelement 146B angebracht ist. Die Bewegung des Magnetelements 146B (d.h. der vom Stößel 146A bzw. Kolben 142B zurückgelegte Weg) wird mittels eines Hallsensors 146C erfasst. Ein Ausgangssignal des Hallsensors 146C wird von einer in Fig. 3 nicht gezeigten Steuereinheit (vgl. Bezugszeichen 150 in den Fign. 1 und 2) ausgewertet. Basierend auf dieser Auswertung kann dann der elektromechanische Aktuator 124 angesteuert werden.

Nun zum zweiten Ventil 176, welches der Simulationseinrichtung 108 vorgeschaltet ist und in manchen Ausführungsformen entfallen kann. Diese Ventil 176 besitzt eine vorgegebene oder einstellbare Drosselfunktion. Mittels der einstellbaren Drosselfunktion lässt sich beispielsweise eine Hysterese oder anderweitige Kennlinie für das Pedalrückwirkverhalten erzielen. Ferner kann durch selektives Sperren des Ventils 176 die Bewegung des Kolbens 142B (bei geschlossenen Ventilen 174, 178) und damit der Bremspedalweg begrenzt werden.

Das dritte Ventil 178 ermöglich in seiner geöffneten Stellung das Fördern von Hydraulikfluid aus dem Zylinder 142A in den Bremskreis I. bzw. die Hydraulikkammer 116 des Hauptzylinders 110 und umgekehrt. Eine Fluidförderung aus dem Zylinder 142A in den Bremskreis I. ermöglicht beispielsweise ein schnelles Anbremsen (z.B. vor dem Einsetzen der Förderwirkung des elektromechanischen Aktuators 124), wobei das Ventil 178 umgehend wieder geschlossen wird. Ferner lässt sich bei geöffnetem Ventil 178 eine hydraulische Rückwirkung (z.B. einer mittels des elektromechanischen Aktuators 124 erzeugten Druckmodulation im Fahrdynamikregelbetrieb) über den Kolben 142B auf das Bremspedal erzielen.

In einer in den Anschluss 180 des Zylinders 142A mündenden Hydraulikleitung ist ein Drucksensor 148 vorgesehen, dessen Ausgangssignal einen Rückschluss auf die Betätigungskraft am Bremspedal gestattet. Das Ausgangssignal dieses Drucksensors 148wird von einer in Fig. 3 nicht gezeigte Steuereinheit ausgewertet. Basierend auf dieser Auswertung kann dann eine Ansteuerung eines oder mehrerer der Ventile 170, 172, 174, 176, 178 zur Realisierung der oben geschilderten Funktionalitäten erfolgen. Ferner kann basierend auf dieser Auswertung der elektromechanische Aktuator 124 angesteuert werden.

Bei der in Fig. 3 gezeigten Bremsanlage 100 kann die in Fig. 1 dargestellte HCU 106 verwendet werden. Eine beispielhafte Realisierung dieser HCU 106 für die Bremsanlage 100 gemäß Fig. 3 ist in Fig. 4 gezeigt. Hier sind insgesamt 12 (zusätzliche) Ventile zur Realisierung der Fahrdynamikregelfunktionen vorgesehen sowie eine zusätzliche Hydraulikpumpe. In einer alternativen Ausführungsform kann für die in Fig. 3 gezeigten Bremsanlage 100 auch die Multiplex-Anordnung gemäß Fig. 2 (mit insgesamt vier Ventilen zusätzlich zu den in Fig. 3 veranschaulichten Ventilen) zum Einsatz gelangen.

Bei den in den Fign. 1 bis 4 gezeigten Ausführungsbeispielen werden zum regenerativen Bremsen der Generator 102 hinzugeschaltet und eines oder beide der Ventile 170, 172 geöffnet, um eine "Leerwegfreischaltung" für den Primärkolben 112 und den Sekundärkolben 114 zu realisieren. Da von dem Zeitpunkt des Hinzuschaltens des Generators 102 bis zur Erzielung einer signifikanten Generatorbremskraft eine gewisse Zeitdauer vergeht, kann es in manchen Situationen (z.B. zum schnellen Anbremsen) wünschenswert sein, zumindest anfänglich einen unterstützenden Hydraulikdruck an den Radbremsen VL, VR, HL und HR und damit eine unterstützende Bremskraft zu erzeugen. Dies kann durch Ansteuern des elektromechanischen Aktuators 124 bei geschlossenen Ventilen 170, 172 und geöffneter Fluidverbindung zwischen dem Hauptzylinder 110 (d.h. den Hydraulikkammern 116, 118) und den Radbremsen VL, VR, HL und HR geschehen.

Nun kann die Situation auftreten, dass der Fahrer einen anfänglichen Verzögerungswunsch weiter steigert, der jedoch vollständig mit der Generatorbremskraft erreichbar wäre. Es bestehen in einer solchen Situation folglich viele Randbedingungen. Das Fahrzeug bremst hydraulisch, und die Radbremsen VL, VR, HL und HR sind mit Hydraulikdruck beaufschlagt. Eine angeforderte weitere Zunahme der Bremskraft kann (allein) mittels der Generatorbremskraft erzielt werden. Dabei soll sich der herrschende Hydraulikdruck an den Radbremsen VL, VR, HL und HR nach Möglichkeit nicht verändern (beispielsweise nicht erhöhen, um die Generatorwirkung nicht zu schmälern). Gleichzeitig sollte aus Sicherheitsgründen die Fluidverbindung zwischen den Hydraulikkammern 116, 118 und den Radbremsen VL. VR, HL und HR offen bleiben. Beispielsweise sollten keine Ventile in dieser Fluidverbindung geschaltet werden, da eine fehlerhafte Schaltung solcher Ventile in der HCU 106 zu einem Verzögerungsverlust für das Fahrzeug führen könnte.

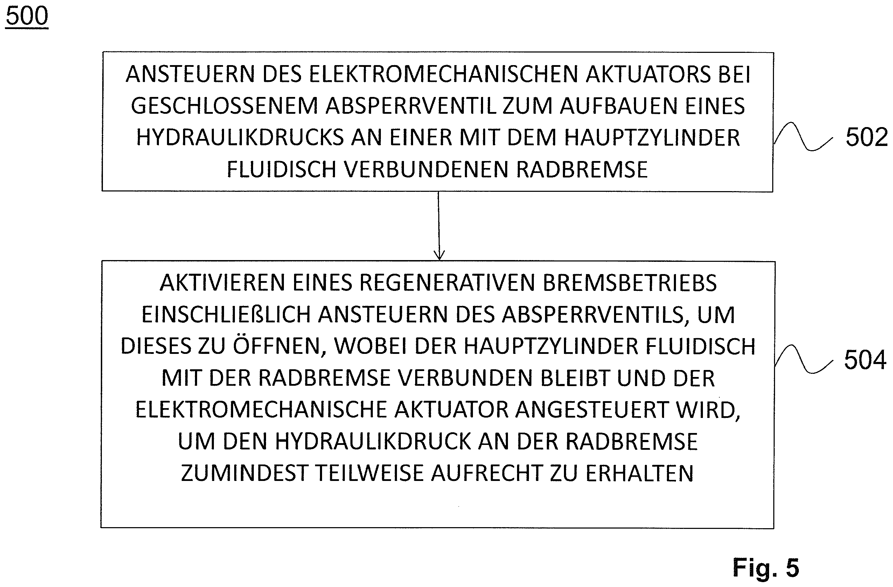

Es besteht daher der Bedarf, einen Hydraulikdruck an den Radbremsen VL, VR, HL und HR zumindest beizubehalten oder idealerweise noch verändern zu können, während gleichzeitig eine Leerwegfreischaltung stattfindet. Gemäß dem in Fig. 5 veranschaulichten Flussdiagramm 500 eines Ausführungsbeispiels für das Betreiben der regenerativen elektrohydraulischen Bremsanlage gemäß einer der Fign. 1 bis 4 werden hierzu zwei Schritte eingeleitet.

Ein erster Schritt 502 beinhaltet das Ansteuern des elektromechanischen Aktuators 124 bei geschlossenen Ventilen 170, 172 zum Aufbauen eines Hydraulikdrucks an wenigstens einer der Radbremsen VL, VR, HL und HR. Auf diese Weise lässt sich auch bereits vor Einsetzen der Generatorbremskraft bei aktiviertem regenerativem Bremsbetrieb für ein schnelles Anbremsen Hydraulikdruck an den Radbremsen VL, VR, HL und HR aufbauen. Es versteht sich, dass zum Aufbauen dieses Hydraulikdrucks die Fluidverbindung zwischen den Hydraulikkammern 116, 118 des Hauptzylinders 110 und den Radbremsen VL, VR, HL und HR geöffnet sein muss.

Im Anschluss daran erfolgt bei aktiviertem regenerativen Bremsbetrieb ein Ansteuern wenigstens eines der Ventile 170, 172, um diese(s) zu öffnen. Dies entspricht Schritt 504. Die Hydraulikkammern 116, 118 des Hauptzylinders 110 bleiben dabei fluidisch mit den Radbremsen VL, VR, HL und HR verbunden. Ferner wird der elektromechanische Aktuator 124 derart angesteuert, dass der Hydraulikdruck an den Radbremsen VL, VR, HL und HR zumindest teilweise erhalten bleibt. In diesem Zusammenhang ist darauf hinzuweisen, dass der regenerative Bremsbetrieb nicht alle vier Radbremsen VL, VR, HL und HR umfassen muss. Vielmehr kann der regenerative Bremsbetrieb auf die Vorderachse (Radbremsen VL und VR) oder die Hinterachse (Radbremsen HL und HR) beschränkt sein.

In Schritt 504 wird die Schnelligkeit des Elektromotors 134 ausgenutzt, um mindestens so viel Volumen an Hydraulikfluid aus den Hydraulikkammern 116, 118 nachzuschieben, wie über eines oder beide der Ventile 170, 172 in das Reservoir 120 abfließt. In diesem Zusammenhang lässt sich aufgrund der hohen Dynamik des Elektromotors 134 ein Staueffekt an einer Drosselstelle in der Fluidverbindung zwischen dem Hauptzylinder 110 und dem Reservoir 120 ausnutzen. Dieser Staueffekt bewirkt, dass der an den Radbremsen VL, VR, HL und HR in Schritt 502 aufgebaute Hydraulikdruck wenigstens beibehalten oder zumindest nur geringfügig reduziert wird, obwohl die Radbremsen VL, VR, HL und HR fluidisch sowohl mit dem Hauptzylinder 110 als auch (über das geöffnete Ventil 170 und/oder 172) mit dem drucklosen Reservoir 120 verbunden sind. Ein substantieller Druckabfall an den Radbremsen VL, VR, HL und HR kann auf diese Weise verhindert werden. Der Hydraulikdruck an den Radbremsen VL, VR, HL und HR ist bei geöffnetem Ventil 170 und/oder 172 und fluider Kommunikation mit dem Hauptzylinder 110 durch das Verhältnis zwischen einem mittels des elektromechanischen Aktuators 124 im Hauptzylinder 110 geförderten ersten Fluidvolumen und einem über das Ventil 170 und/oder das Ventil 172 in das Reservoir 120 entweichenden zweiten Fluidvolumen festgelegt.

Die auf das Fahrzeug insgesamt wirkende Bremskraft ist die Summe aus einem mittels des Hydraulikdrucks an den Radbremsen VL, VR, HL und HR erzeugten ersten Bremskraftanteil und einen mittels des regenerativen Bremsbetriebs (Generatorbremskraft) erzeugten zweiten Bremskraftanteil. Diese Summe wird derart eingestellt, dass sie einer vom Fahrer am Bremspedal 130 angeforderten und sensorisch ermittelten Bremskraft entspricht. Eine vom Fahrer angeforderte Modulation der Bremskraft (z. B. eine Erhöhung oder eine Erniedrigung) lässt sich über eine Modulation des ersten Bremskraftanteils und/oder eine Modulation des zweiten Bremskraftanteils abbilden. Beispielsweise kann der elektromechanische Aktuator 124 derart betrieben werden, dass zur Aufrechterhaltung des Hydraulikdrucks an den Radbremsen VL, VR, HL und HR genauso viel Hydraulikfluid aus dem Hauptzylinder 110 gefördert wird, wie in das drucklose Reservoir 120 abgelassen wird. Wird hingegen mehr Hydraulikfluid aus dem Hauptzylinder 110 gefördert, erhöht sich der Hydraulikdruck (und damit die von den Radbremsen VL, VR, HL und HR aufgebrachte Bremskraft) und umgekehrt.

Die Drosselstelle kann in der Fluidverbindung zwischen dem Hauptzylinder 110 und dem Reservoir 120 auf verschiedene Art und Weise realisiert werden. Zum einen könnte man in die Rücklaufleitung zum Reservoir 120, in der das Ventil 170 und/oder das Ventil 172 angeordnet ist, ein Drosselelement mit fest vorgegebenem oder veränderlichem Drosselquerschnitt einfügen. In den vorliegenden Ausführungsbeispielen wird auf eine derartige Zusatzkomponente verzichtet und stattdessen die Drosselwirkung des Ventils 170 und/oder des Ventils 172 in geöffnetem Zustand zur Erzeugung des gewünschten Staueffekts verwendet. Die daraus resultierende Drosselwirkung ist derart gewählt, dass ein Gesamtströmungswiderstand zwischen dem Hauptzylinder 110 und den Radbremsen VL, VR, HL und HR geringer ist als ein Gesamtströmungswiderstand zwischen dem Hauptzylinder 110 und dem Reservoir 120 (bei geöffnetem Ventil 170 und/oder 172).

Die hier vorgeschlagene Vorgehensweise hat den Vorteil, dass trotz Öffnen wenigstens eines der Ventile 170, 172 eine Unterbrechung der hydraulischen Verbindung zwischen dem Hauptzylinder 110 und den Radbremsen VL, VR, HL und HR (durch Schließen entsprechender Ventile der HCU 106) nicht notwendig ist. Dies ist aus Sicherheitsgründen wünschenswert, da ein Kommunikationsfehler, die entsprechenden Absperrventile der HCU 106 (z. B. der TCISO-Ventile in Fig. 4) fehlerhaft nicht zu schalten, zu einem Verzögerungsverlust führen würde. Ferner kann die hier vorgestellte Lösung gemäß einer Implementierung ohne zusätzliche Bauelemente realisiert werden, da der inhärente Drosseleffekt des geöffneten Ventils 170 und/oder 172 ausgenutzt werden kann. Auch kann der Spalt 190 zwischen dem Betätigungselement 128 und dem Kolbenfortsatz 142C bei einer Implementierung der hier vorgestellten technischen Lehre aufrechterhalten werden. Mit anderen Worten kann das Bremspedal 130 mechanisch vom Hauptzylinder 110 entkoppelt bleiben.

Ein Schließen der Fluidverbindung zwischen dem Hauptzylinder 110 und den Radbremsen VL, VR, HL und HR kann auf solche Fälle beschränkt werden, in denen ein Nachfüllen der Hydraulikkammern 116, 118 mit Hydraulikfluid aus dem Reservoir 120 erfolgen muss.

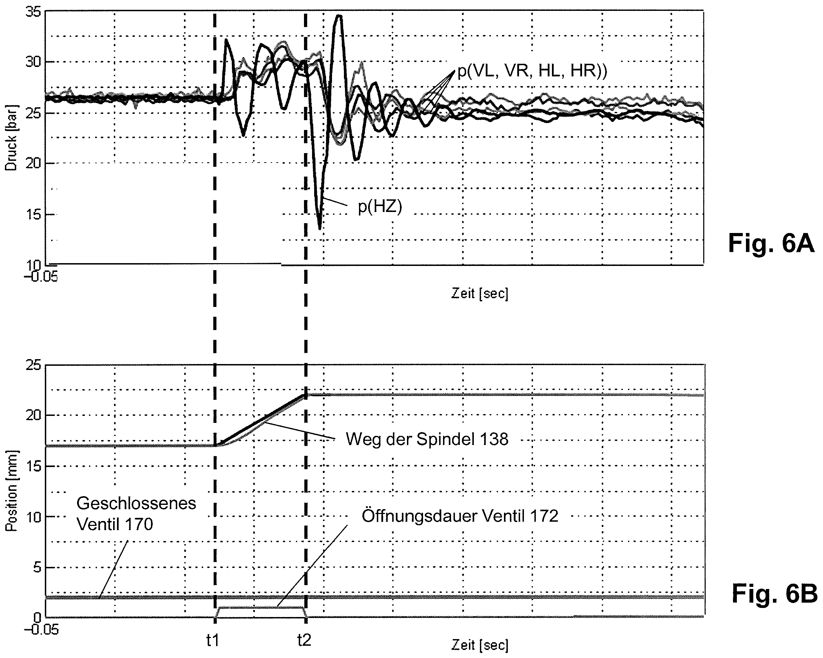

Die Fign. 6A und 6B veranschaulichen beispielhaft den zeitlichen Druckverlauf im Hauptzylinder 110 und an den Radbremsen VL, VR, HL und HR (Fig. 6A) als Folge einer Ansteuerung des elektromechanischen Aktuators 124 bei geöffnetem Ventil 172 und geschlossenem Ventil 170 (Fig. 6B). In diesem Zusammenhang ist darauf hinzuweisen, dass aufgrund der schwimmenden Hauptzylinderkolben 112, 114 ein Druckabfal in einer der beiden Kammern 116, 118 beide Bremskreise I., II. betrifft.

Wie in Fig. 6A oben veranschaulicht, wurde bereits vor dem Zeitpunkt t1 der elektromechanische Aktuator 124 bei geschlossenen Ventilen 170, 172 derart angesteuert, dass ein Hydraulikdruck von ungefähr 23 bar an den Radbremsen VL, VR, HL und HR anliegt. Aufgrund der offenen Fluidverbindung zwischen dem Hauptzylinder 110 und den Radbremsen VL, VR, HL und HR herrscht im Hauptzylinder 110 (d.h. in den Kammern 116, 118) derselbe Hydraulikdruck. Der in Fig. 6A veranschaulichte Hydraulikdruck diente einem schnellen Anbremsen im Rahmen eines regenerativen Bremsbetriebs. Der regenerative Bremsbetrieb wurde durch Hinzuschalten des Generators 102 aktiviert. Diese Aktivierung erfolgte in engem zeitlichen Zusammenhang mit dem Aufbau des in Fig. 6A veranschaulichten Hydraulikdrucks.

Zum Zeitpunkt t1 wird dann bei weiterhin aktiviertem regenerativem Bremsbetrieb das Ventil 172 geöffnet, während das Ventil 170 geschlossen bleibt und der Hauptzylinder 110 fluidisch mit den Radbremsen VL, VR, HL und HR verbunden bleibt. Um einen Hydraulikdruckverlust an den Radbremsen VL, VR, HI und HR aufgrund des "fluidischen Kurzschlusses" mit dem drucklosen Reservoir 120 zu vermeiden, wird ebenfalls zum Zeitpunkt t1 der elektromechanische Aktuator 124 in geeigneter Weise angesteuert, um Hydraulikfluid aus dem Hauptzylinder 110 in die Bremskreise I., II. nachzuschieben. Dies ist in Fig. 6B durch den entsprechenden Vorschubweg der Getriebespindel 138 veranschaulicht.

Zum Zeitpunkt t2 wird dann das Ventil 172 wieder geschlossen und die Ansteuerung des elektromechanischen Aktuators 124 endet. Gleichzeitig bleibt die Fluidverbindung zwischen dem Hauptzylinder 110 und den Radbremsen VL, VR, HL und HR geöffnet und der regenerative Bremsbetrieb aktiviert. Die vom Fahrer angeforderte Bremskraft wird daher weiterhin von einem ersten Bremskraftanteil, der mittels des Hydraulikdrucks erzeugt wird, und einem zweiten Bremskraftanteil, der auf die Generatorbremskraft zurückgeht, realisiert.

Wie in Fig. 6A veranschaulicht, kann während der Öffnungsdauer des Ventils 172 der Bremsdruck an den Radbremsen VL, VR, HL und HR moduliert (hier erhöht) werden, um einem entsprechenden Fahrerwunsch (hier nach Erhöhung der Bremskraft) nachzukommen. Trotz des "fluidischen Kurzschlusses" zwischen den Radbremsen VL, VR, HL und HR kommt es während der Öffnungsdauer des Ventils 172 damit zu keinem Hydraulikdruckverlust. Dies belegt, dass der Elektromotor 134 eine ausreichend hohe Dynamik aufweist, also bei ausreichend hoher Drehzahl betrieben werden kann, um den erforderlichen Staudruck am geöffneten Ventil 172 zu realisieren. Damit können während des gesamten, in den Fign. 6A und 6B veranschaulichten regenerativen Bremsvorgangs die Radbremsen VL, VR, HL und HR über die HCU 106 fluidisch mit dem Hauptzylinder 110 verbunden bleiben. Dies ist eine aus Sicherheitsgründen wünschenswerte Maßnahme.

## Patentansprüche

1. Verfahren für das Betreiben einer regenerativen elektrohydraulischen Kraftfahrzeug-Bremsanlage (100) mit einem aus einem Reservoir (120) mit Hydraulikfluid versorgbaren Hauptzylinder (110), einem elektromechanischen Aktuator (124) zur Betätigung eines im Hauptzylinder (110) aufgenommenen Kolbens (112; 114) und einem zwischen dem Hauptzylinder (110) und dem Reservoir (120) vorgesehenen Absperrventil (170; 172), umfassend die Schritte:
Ansteuern des elektromechanischen Aktuators (124) bei geschlossenem Absperrventil (170; 172) zum Aufbauen eines Hydraulikdrucks an einer mit dem Hauptzylinder (110) fluidisch verbundenen Radbremse; und
Aktivieren eines regenerativen Bremsbetriebs und Ansteuern des Absperrventils (170; 172), um dieses zu öffnen, wobei der Hauptzylinder (110) fluidisch mit der Radbremse verbunden bleibt und der elektromechanische Aktuator (124) angesteuert wird, um den Hydraulikdruck an der Radbremse zumindest teilweise aufrecht zu erhalten.

2. Verfahren nach Anspruch 1, wobei
bei geöffnetem Absperrventil (170; 172) und mit der Radbremse fluidisch verbundenem Hauptzylinder (110) der Hydraulikdruck eingestellt wird durch das Verhältnis zwischen einem mittels des elektromechanischen Aktuators (124) im Hauptzylinder (110) geförderten ersten Fluidvolumen und einem über das Absperrventil (170; 172) in das Reservoir entweichenden zweiten Fluidvolumen.

3. Verfahren nach Anspruch 1 oder 2, wobei
die Ansteuerung des elektromechanischen Aktuators (124) bei geöffnetem Absperrventil (170; 172) und mit der Radbremse fluidisch verbundenem Hauptzylinder (110) derart erfolgt, dass ein Staueffekt an einer Drosselstelle (170; 172) in einer Fluidverbindung zwischen dem Hauptzylinder (110) und dem Reservoir (120) erzeugt wird.

4. Verfahren nach einem der vorhergehenden Ansprüche, wobei
die Summe aus einem mittels des Hydraulikdrucks erzeugten ersten Bremskraftanteil und einem mittels des regenerativen Bremsbetriebs erzeugten zweiten Bremskraftanteil einer vom Fahrer angeforderten Bremskraft entspricht, wobei vorzugsweise eine Modulation der vom Fahrer angeforderten Bremskraft zumindest teilweise über eine Modulation des ersten Bremskraftanteils abgebildet wird.

5. Verfahren nach Anspruch 4, wobei
eine Modulation der vom Fahrer angeforderten Bremskraft zumindest teilweise über eine Modulation des zweiten Bremskraftanteils abgebildet wird.

6. Verfahren nach einem der vorhergehenden Ansprüche, wobei
die Bremsanlage (100) ferner einen mechanischen Aktuator (126) zur Betätigung des Kolbens (112; 114) umfasst, wobei der mechanische Aktuator (126) ein mit einem Bremspedal (130) gekoppeltes oder koppelbares Betätigungsglied (128; 142B) umfasst und wobei der elektromechanische Aktuator (124) derart angesteuert wird, dass eine Kraftübertragung vom Betätigungsglied (128; 142B) zum Kolben (112; 114) unterbunden wird, wobei
der elektromechanische Aktuator (124) vorzugsweise derart angesteuert wird, dass in einem Kraftübertragungsweg zwischen dem Betätigungsglied (142B) und dem Kolben (112; 114) ein Spalt (190) aufrecht erhalten wird.

7. Computerprogrammprodukt mit Programmcodemitteln zum Durchführen des Verfahrens nach einem der vorhergehenden Ansprüche, wenn das Computerprogrammprodukt auf einem Prozessor abläuft.

8. Kraftfahrzeug-Steuergerät oder -Steuergerätesystem, umfassend das Computerprogrammprodukt nach Anspruch 7.

9. Regenerative elektrohydraulische Kraftfahrzeug-Bremsanlage (110), umfassend
einen aus einem Reservoir (120) mit Hydraulikfluid versorgbaren Hauptzylinder (110);
einen elektromechanischen Aktuator (124) zur Betätigung eines im Hauptzylinder (110) aufgenommenen Kolbens (112; 114);
ein zwischen dem Hauptzylinder (110) und dem Reservoir (120) vorgesehenes erstes Absperrventil (170; 172); und
ein Steuergerät oder Steuergerätesystem (150), das ausgebildet ist zum Ansteuern des elektromechanischen Aktuators (124) bei geschlossenem ersten Absperrventil (170; 172) zum Aufbauen eines Hydraulikdrucks an einer mit dem Hauptzylinder (110) fluidisch verbundenen Radbremse; und
Aktivieren eines regenerativen Bremsbetriebs und Ansteuern des ersten Absperrventils (170; 172), um dieses zu öffnen, wobei der Hauptzylinder (110) fluidisch mit der Radbremse verbunden bleibt und der elektromechanische Aktuator angesteuert wird, um den Hydraulikdruck an der Radbremse zumindest teilweise aufrecht zu erhalten.

10. Bremsanlage nach Anspruch 9, ferner umfassend
eine Drosselstelle (170; 172) in einer Fluidverbindung zwischen dem Hauptzylinder (110) und dem Reservoir (120).

11. Bremsanlage nach Anspruch 10, wobei
die Drosselstelle von dem ersten Absperrventil (170; 172) in geöffnetem Zustand gebildet wird.

12. Bremsanlage nach einem der Ansprüche 9 bis 11, wobei
ein erster Gesamtströmungswiderstand zwischen dem Hauptzylinder (110) und der damit fluidisch verbundenen Radbremse geringer ist als ein zweiter Gesamtströmungswiderstand zwischen dem Hauptzylinder (110) und dem Reservoir (12) bei geöffnetem ersten Absperrventil (170; 172).

13. Bremsanlage nach einem der Ansprüche 9 bis 12, ferner umfassend
einen mechanischen Aktuator (126) zur Betätigung des Kolbens (112; 114), wobei der mechanische Aktuator (126) ein mit einem Bremspedal (130) gekoppeltes oder koppelbares Betätigungsglied (128; 142B) umfasst und wobei der elektromechanische Aktuator (124) derart ansteuerbar ist, dass eine Kraftübertragung vom Betätigungsglied (126; 142B) zum Kolben (112; 114) unterbindbar ist.

14. Bremsanlage nach einem der Ansprüche 9 bis 13, ferner umfassend
eine elektrische Maschine (102), die für den regenerativen Bremsbetrieb als Generator betreibbar ist.

15. Bremsanlage nach einem der Ansprüche 9 bis 14, wobei
der Hauptzylinder (110) mit einer Mehrzahl von Radbremsen fluidisch verbunden ist und in der Fluidverbindung zwischen dem Hauptzylinder (110) und jeder Radbremse jeweils wenigstens ein zweites Absperrventil (152; 154; 156; 158) vorgesehen ist, wobei die zweiten Absperrventile (152; 154; 156; 158) zur Realisierung einer Fahrdynamikregelung im Multiplexbetrieb ansteuerbar sind.

## Claims

1. Method for operating a regenerative electrohydraulic motor-vehicle brake system (100) having a master cylinder (110) that can be supplied with hydraulic fluid from a reservoir (120), an electromechanical actuator (124) for actuating a piston (112; 114) accommodated in the master cylinder (110), and a shut-off valve (170; 172) provided between the master cylinder (110) and the reservoir (120), comprising the steps of
actuating the electromechanical actuator (124) with the shut-off valve (170; 172) being closed for generating a hydraulic pressure at a wheel brake that is fluidically connected to the master cylinder (110); and
activating a regenerative braking operation and actuating the shut-off valve (170; 172) for opening same, wherein the master cylinder (110) remains fluidically connected to the wheel brake and the electromechanical actuator (124) is actuated in order to at least partially maintain the hydraulic pressure at the wheel brake.

2. Method according to Claim 1, wherein,
with the shut-off valve (170; 172) being open and with the master cylinder (110) fluidically connected to the wheel brake, the hydraulic pressure is set by the relationship between a first fluid volume conveyed by means of the electromechanical actuator (124) in the master cylinder (110) and a second fluid volume escaping into the reservoir via the shut-off valve (170; 172).

3. Method according to Claim 1 or 2, wherein
the actuation of the electromechanical actuator (124) with the shut-off valve (170; 172) being open and with the master cylinder (110) fluidically connected to the wheel brake is effected in such a way that a damming-up effect is generated at a throttling point (170; 172) in a fluid connection between the master cylinder (110) and the reservoir (120).

4. Method according to one of the preceding claims, wherein
the sum of a first brake force fraction generated by means of the hydraulic pressure and a second brake force fraction generated by means of the regenerative braking operation corresponds to a brake force requested by the driver, wherein preferably a modulation of the brake force requested by the driver is realized at least partly via a modulation of the first brake force fraction.

5. Method according to Claim 4, wherein
a modulation of the brake force requested by the driver is realized at least partly via a modulation of the second brake force fraction.

6. Method according to one of the preceding claims, wherein
the brake system (100) further comprises a mechanical actuator (126) for actuating the piston (112; 114), wherein the mechanical actuator (126) comprises an actuating member (128; 142B) coupled or couplable to a brake pedal (130) and wherein the electromechanical actuator (124) is actuated in such a way that a force transmission from the actuating member (128; 142B) to the piston (112; 114) is prevented, wherein
the electromechanical actuator (124) is preferably actuated in such a way that a gap (190) is maintained in a force transmission path between the actuating member (142B) and the piston (112; 114).

7. Computer program product with program code means for performing the method according to one of the preceding claims when the computer program product runs on a processor.

8. Motor-vehicle control unit or control unit system, comprising the computer program product according to Claim 7.

9. Regenerative electrohydraulic motor-vehicle brake system (110), comprising
a master cylinder (110) that can be supplied with hydraulic fluid from a reservoir (120);
an electromechanical actuator (124) for actuating a piston (112; 114) accommodated in the master cylinder (110);
a first shut-off valve (170; 172) provided between the master cylinder (110) and the reservoir (120); and
a control unit or control unit system (150), which is configured to
actuate the electromechanical actuator (124) with the first shut-off valve (170; 172) being closed for generating a hydraulic pressure at a wheel brake that is fluidically connected to the master cylinder (110); and
activate a regenerative braking operation and actuate the first shut-off valve (170; 172) for opening same, wherein the master cylinder (110) remains fluidically connected to the wheel brake and the electromechanical actuator is actuated in order to at least partially maintain the hydraulic pressure at the wheel brake.

10. Brake system according to Claim 9, further comprising
a throttling point (170; 172) in a fluid connection between the master cylinder (110) and the reservoir (120).

11. Brake system according to Claim 10, wherein
the throttling point is formed by the first shut-off valve (170; 172) in the open state.

12. Brake system according to one of Claims 9 to 11, wherein
a first overall flow resistance between the master cylinder (110) and the wheel brake fluidically connected thereto is less than a second overall flow resistance between the master cylinder (110) and the reservoir (12) with the first shut-off valve (170; 172) being open.

13. Brake system according to one of Claims 9 to 12, further comprising
a mechanical actuator (126) for actuating the piston (112; 114), wherein the mechanical actuator (126) comprises an actuating member (128; 142B) coupled or couplable to a brake pedal (130) and wherein the electromechanical actuator (124) is actuable in such a way that a force transmission from the actuating member (128; 142B) to the piston (112; 114) is preventable.

14. Brake system according to one of Claims 9 to 13, further comprising an electrical machine (102) which is operable as a generator for the regenerative braking operation.

15. Brake system according to one of Claims 9 to 14, wherein
the master cylinder (110) is fluidically connected to a plurality of wheel brakes and in the fluid connection between the master cylinder (110) and each wheel brake there is provided in each case at least one second shut-off valve (152; 154; 156; 158), wherein the second shut-off valves (152; 154; 156; 158) are actuable in multiplex operation for realising a driving dynamics control.

## Revendications

1. Procédé de fonctionnement d'un système de freinage électrohydraulique régénératif (100) pour un véhicule automobile, comprenant un maître-cylindre (110) pouvant être alimenté en fluide hydraulique à partir d'un réservoir (120), un actionneur électromécanique (124) pour actionner un piston (112 ; 114) logé dans le maître-cylindre (110) et une vanne d'arrêt (170 ; 172) prévue entre le maître-cylindre (110) et le réservoir (120), comprenant les étapes de :
commande de l'actionneur électromécanique (124), la vanne d'arrêt (170 ; 172) étant fermée, pour établir une pression hydraulique sur un frein de roue relié fluidiquement au maître-cylindre (110) ; et
activation d'un mode de freinage régénératif et commande de la vanne d'arrêt (170 ; 172) afin d'ouvrir celle-ci, le maître-cylindre (110) restant relié fluidiquement au frein de roue et l'actionneur électromécanique (124) étant commandé afin de maintenir au moins partiellement la pression hydraulique sur le frein de roue.

2. Procédé selon la revendication 1, dans lequel
la vanne d'arrêt (170 ; 172) étant ouverte et le maître-cylindre (110) relié fluidiquement au frein de roue, la pression hydraulique est réglée par le rapport entre un premier volume de fluide refoulé dans le maître-cylindre (110) au moyen de l'actionneur électromécanique (124) et un deuxième volume de fluide s'échappant dans le réservoir via la vanne d'arrêt (170 ; 172).

3. Procédé selon la revendication 1 ou 2, dans lequel
la commande de l'actionneur électromécanique (124), vanne d'arrêt (170 ; 172) ouverte et maître-cylindre (110) relié fluidiquement au frein de roue, est réalisée de façon à produire un effet de retenue à un point d'étranglement (170 ; 172) dans une liaison fluidique entre le maître-cylindre (110) et le réservoir (120).

4. Procédé selon l'une des revendications précédentes, dans lequel
la somme d'une première composante de force de freinage produite au moyen de la pression hydraulique et d'une deuxième composante de force de freinage produite au moyen du mode de freinage régénératif correspond à une force de freinage demandée par le conducteur, une modulation de la force de freinage demandée par le conducteur étant de préférence reproduite au moins partiellement par une modulation de la première composante de force de freinage.

5. Procédé selon la revendication 4, dans lequel
une modulation de la force de freinage demandée par le conducteur est reproduite au moins partiellement par une modulation de la deuxième composante de force de freinage.

6. Procédé selon l'une des revendications précédentes, dans lequel le système de freinage (100) comprend en outre un actionneur mécanique (126) pour actionner le piston (112 ; 114), l'actionneur mécanique (126) comprenant un organe d'actionnement (128 ; 142B) accouplé ou pouvant être accouplé à une pédale de frein (130), et l'actionneur électromécanique (124) étant commandé de façon qu'une transmission de force de l'organe d'actionnement (128 ; 142B) au piston (112 ; 114) soit empêchée, dans lequel
l'actionneur électromécanique (124) est de préférence commandé de façon qu'une fente (190) soit maintenue dans un trajet de transmission de force entre l'organe d'actionnement (142B) et le piston (112 ; 114).

7. Produit programme d'ordinateur avec des moyens de codage de programme pour mettre en oeuvre le procédé selon l'une des revendications précédentes lorsque le produit programme d'ordinateur est exécuté sur un processeur.

8. Module de commande ou système de modules de commande pout un véhicule automobile, comprenant le produit programme d'ordinateur selon la revendication 7.

9. Système de freinage électrohydraulique régénératif (110) pour un véhicule automobile, comprenant
un maître-cylindre (110) pouvant être alimenté en fluide hydraulique à partir d'un réservoir (120) ;
un actionneur électromécanique (124) pour actionner un piston (112 ; 114) logé dans le maître-cylindre (110) ;
une première vanne d'arrêt (170 ; 172) prévue entre le maître-cylindre (110) et le réservoir (120) ; et
un module de commande ou système de modules de commande (150) qui est conçu pour
commander l'actionneur électromécanique (124), la première vanne d'arrêt (170 ; 172) étant fermée, afin d'établir une pression hydraulique sur un frein de roue relié fluidiquement au maître-cylindre (110) ; et
activer un mode de freinage régénératif et commander la première vanne d'arrêt (170 ; 172) afin d'ouvrir celle-ci, le maître-cylindre (110) restant relié fluidiquement au frein de roue et l'actionneur électromécanique étant commandé afin de maintenir au moins partiellement la pression hydraulique sur le frein de roue.

10. Système de freinage selon la revendication 9, comprenant en outre
un point d'étranglement (170 ; 172) dans une liaison fluidique entre le maître-cylindre (110) et le réservoir (120).

11. Système de freinage selon la revendication 10, dans lequel
le point d'étranglement est formé par la première vanne d'arrêt (170 ; 172) à l'état ouvert.

12. Système de freinage selon l'une des revendications 9 à 11, dans lequel
une première résistance à l'écoulement totale entre le maître-cylindre (110) et le frein de roue qui y est relié fluidiquement est plus faible qu'une deuxième résistance à l'écoulement totale entre le maître-cylindre (110) et le réservoir (12) lorsque la première vanne d'arrêt (170 ; 172) est ouverte.

13. Système de freinage selon l'une des revendications 9 à 12, comprenant en outre
un actionneur mécanique (126) pour actionner le piston (112 ; 114), l'actionneur mécanique (126) comprenant un organe d'actionnement (128 ; 142B) accouplé ou pouvant être accouplé à une pédale de frein (130) et l'actionneur électromécanique (124) pouvant être commandé de façon qu'une transmission de force de l'organe d'actionnement (126 ; 142B) au piston (112 ; 114) puisse être empêchée.

14. Système de freinage selon l'une des revendications 9 à 13, comprenant en outre
une machine électrique (102) qui peut être utilisée comme générateur pour le mode de freinage régénératif.

15. Système de freinage selon l'une des revendications 9 à 14, dans lequel
le maître-cylindre (110) est relié fluidiquement à une pluralité de freins de roue et au moins une deuxième vanne d'arrêt (152 ; 154 ; 156 ; 158) respective est prévue dans la liaison fluidique entre le maître-cylindre (110) et chaque frein de roue, les deuxièmes vannes d'arrêt (152 ; 154 ; 156 ; 158) pouvant être commandées afin de réaliser une régulation de la dynamique de conduite en mode multiplex.
